# EUROPEAN PATENT APPLICATION

(11) **EP 4 488 865 A1**
(43) Date of publication of application: **08.01.2025**
(21) Application number: 24181036.5
(22) Date of filing: 10.06.2024
(51) Int. Cl.: G06F 21/77, G06F 9/48, G06Q 20/32

(54) **A METHOD FOR PERFORMING THE EXECUTION OF AN APPLICATION IN A SECURE ELEMENT AND RELATED SYSTEM AND SECURE ELEMENT**

(30) Priority: 06.07.2023 IT 202300014067
(71) Applicant: STMicroelectronics International N.V., 1228 Plan-les-Ouates, Geneva (CH)
(72) Inventor: DI COSMO, Luca, I-80124 Napoli (IT)
(74) Representative: Buzzi, Notaro & Antonielli d'Oulx S.p.A.

(57) **Abstract**

Described herein is a method for performing the execution of an application (APP2) in a Secure Element (SE2),
comprising sending by (T1-T4) at least a host (11) sending at least an APDU command (AC1) to a Secure Element (SE2) comprising said application (APP2),
processing (T6) at said Secure Element (SE2) being said at least an APDU command (AC1) for execution by said application (APP2), performing a determined plurality of operations of said application (APP2) commanded by said at least an APDU command (AC1),
wherein
said application (APP2) determining among said plurality of application operations commanded by said at least an APDU command (AC1) at least a first set (TSK1) of operations to be executed by said application (APP2) upon receiving said APDU command (AC1) and at least a second set (TSK2) of operations,
said method comprising, at said Secure Element (SE2),
performing said first set (TSK1) of operations to be executed by said application (APP2) upon receiving said APDU command (AC1),
performing a deferred execution (T34-T39) of said at least a second set (TSK2) of operations upon communication of completion of the execution of said at least a first set (TSK1) of operations from the Secure Element (SE2) to the host (11).

## Description

### Technical field

The embodiments of the present disclosure relate to techniques method for performing the execution of an application, in particular a Java Card Applet in a Secure Element, comprising at least a host sending at least an APDU command to a Secure Element comprising said Java Card applet, said Secure Element comprising a Java Card Runtime Environment which is configured to process said at least an APDU command for execution by said Java Card applet, said Java Card applet being configured to perform a determined plurality of applet operations commanded by said at least an APDU command.

In particular, the solutions here described may be applied in application protocols such as Card Connectivity Consortium's Digital Key vehicle access and engine start transactions.

### Description of the prior art

Secure Elements are known, which are, e.g. tamper-resistant platform, typically a one chip secure microcontroller capable of securely hosting applications and their confidential and cryptographic data (for example cryptographic keys) in accordance with the rules and security requirements set by well-identified trusted authorities. Such secure hosting may be obtained for instance using a Java Card platform. A Secure Element may be corresponded or embodied by a UICC, "eUICC, subscriber identity module, "chip card", iUICC, Integrated eUICC, Integrated Secure Element, embedded Secure Element, "Secure Element" or SIM.

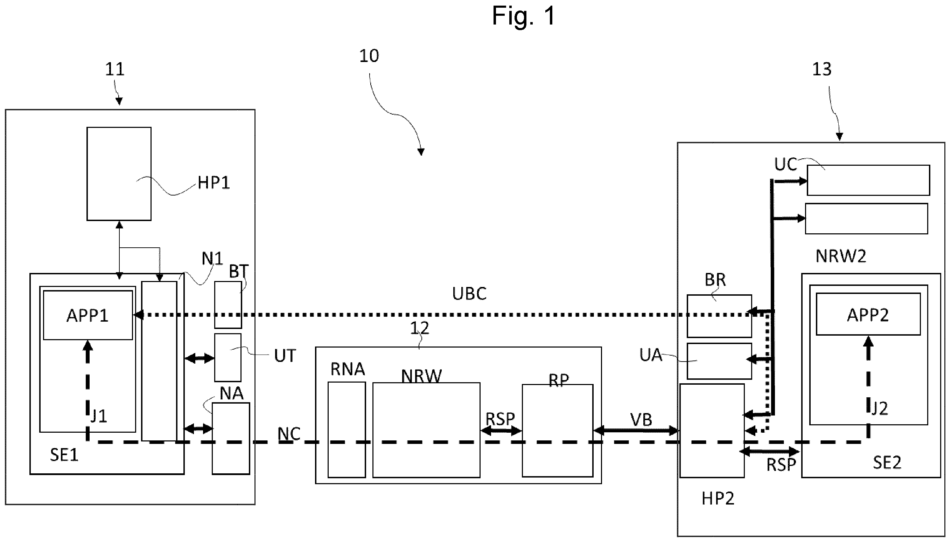

To this regard, in figure 1 it is shown schematically a system 10 comprising a first host 11, e.g., a mobile phone, comprising a host application APP1 operating in a first respective Java Card Runtime Environment J1 within a first Secure Element SE1. Operation of the host 11 is superintended by a microcontroller unit, or microprocessor, HP1. The host application APP1 in the example can access a NFC controller N1 in the first Secure Element SE1. The host application APP1 thus may communicate, through a NFC antenna NA in the first host 11 with a NFC reader 12, on a NFC channel NC, e.g. of the signalling type NFC-A based on ISO/IEC 14443A. The NFC reader 12 comprises a respective NFC antenna RNA coupled to a NFC reader/writer NRW, which decodes the signals exchanged on the NFC channel NC with the first host 11 and communicates, e.g. via a SPI (Serial to Paralle Interface) RSP, with a reader processor RP, which is coupled for communication, e.g. via a CAN bus VB, to a microprocessor within a second host 13, e.g. an ECU host. The second host 13 includes a respective second host SE2, comprising a second Secure Element SE2 comprising a respective Java Card Runtime EnvironmentJ2 comprising a second applet APP2. In figure 1 the second host 13 comprises also a respective NFC reader/writer NRW2 which exchange signal with a second host microcontroller unit HP2 to read and write the signals exchanged on the NFC channel NC. The architecture of the host in particular is here very simplified to show only the modules which are involved in the protocol according to the solution here described. To this regard a dashed line indicates the path of the commands from the first host 11, in particular from the first applet APP1, to the second applet APP2 in the second host 13.

In figure 1 is indicated by way of example also an alternative wireless communication channel UCB, which may a be a BLE (Bluetooth Low Energy)/UWB (Ultra Wide Band wireless channel, which path of commands from the first applet APP1 to the second host 13, in particular the second processor HP2, indicated by a dashed line (shorter dash). The host 11 may comprise a BLE transceiver BT and a UWB transceiver UT at one end of the channel UCB, which at the other end may be coupled to a BLE reader BR and to UWB anchors UA, i.e. devices detecting UWB pulses, in the second host 13. The UWB anchors UA are controlled by a UWB controller UC.

The architecture shown may correspond for instance to a mobile phone which, by means of the first applet APP1, sends commands to open the door of a vehicle, which houses the reader 12 and the second host 13, e.g. an automotive ECU. In such architecture, the second applet APP2 performs tasks directed to open the door of the vehicle through the ECU, e.g. second host 13. In particular the applets (APP2, in particular cooperating with APP1) may implement an operation according to CCC (Car Connectivity Consortium) Digital Key ecosystem.

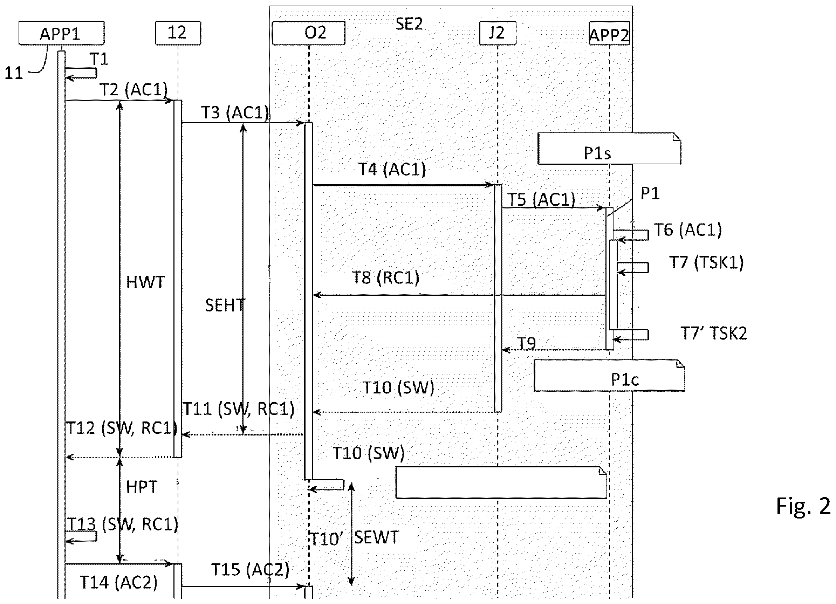

In figure 2 it is shown a protocol diagram representing the protocol by its transitions between the nodes, such as hosts, entities and apps, or interactions, between the first host 11, specifically between its host application APP1 and the second secure element SE2. Host - SE transition is based on APDU Command/Response protocol, according to ISO/IEC 7816 standard. The host application APP1 in the host 11 thus must receive response Status Words SW indicating that the processing of command has been completed, from the second secure element SE2 before processing the corresponding response and proceed with next protocol steps. Response status words SW are bytes, e.g. SW1 (e.g. command processing status), SW2 (e.g. command qualifier), which define the status of the processing in the card, as per the specification ISO-7814-4. The status words SW may signal normal processing (`9000' ISO-7814-4), or several other statuses comprising warning or errors. Thus, for instance, the Status Words SW contains, under the ISO-7814-4, an indication of normal processing (SW1SW2='9000') to indicate completion of a first APDU command AC1, as explained below. A Java Card-based Secure Element, as already mentioned, includes a Java Card Runtime Environment (JCRE) which receives APDU (Application Protocol Data Unit) commands and forwards them to applications (applets) in the Secure Element.

Thus, in figure 2 it is shown in the first place that the first application APP1, in the first host 11 (not shown), performs in a first transition T1 its application function, which determines sending, for instance, in a transition T2 a command, e.g., a first APDU command AC1, to the second secure element SE2 through the reader 12, which forwards the first APDU command AC1 in a transition T3 to the second secure element SE2, which in its turn receives the first APDU command AC1 at its low-level operating system O2, i.e. the operating system in charge of the input/output communication of the Secure Element with other entities, among which the first host 11. The low-level operating system 22 by a transition T4 indicates command received and the APDU command AC1 to the second Java Card Runtime Environment J2. The Java Card Runtime Environment J2 in an transition T5 process the APDU command AC1, e.g. applies the Applet.process(APDU) Method (see for instance the JCRE specification, Java Card^{™} Platform Runtime Environment Specification, Classic Edition Version 3.1 at the URL https://docs.oracle.com/javacard/3.1/related-docs/JCCRE/JCCRE.pdf). The APDU commands result in an instance of the APDU class containing the command being passed to the process(APDU) method of the currently selected applet, i.e. APP2., so it is started an applet execution procedure P1, such start being indicated by P1S, in which a Java Card Virtual Machine, or JVCM, executes the second applet APP2 process, in transition T6 processing the first APDU command AC1, then performing T7 a corresponding first task TSK1, i.e., a task required by the APDU command AC1. Then, in a transition T8 is performed sending a command response, i.e. a response APDU RC1, to the low-level operating system 02. If the first APDU command AC1 requires that more than one task to be performed, e.g. that a second task TSK2 to be performed after the first task TSK1, a second transition T7' occurs, which is more time consuming, the applet execution procedure P1 only when this one or more tasks, in particular in the example task TSK2, considers the Java Card Virtual Machine execution of the applet APP2 process completed (process P1 complete PC) and sends to the low-level OS O2 a completion signal T9 to the Java Card Runtime Environment 02, which in turns determines sending, transition T10, status words SW to the low level operating system O2, which indicates the status of the processing of the commanda, e.g. completion by signalling normal processing (e.g. under the ISO-7814-4, an indication of normal processing (SW1SW2='9000') to indicate completion of a first APDU command AC1, as already mentioned).

Also, in general, the ISO 7816 APDU command/responses are structured as follows:
- APDU Command (e.g. AC1):
   ∘ Header (4 bytes) defining Class, Instruction, Additional command Parameters 1 and 2 (P1 P2)
   ∘ Length of command input data (optional)
   ∘ Command input data (optional)
   ∘ Length of the expected output data (optional)
- APDU response:
   ∘ output data (optional)
   ∘ Status Words (2 bytes)

The allowed values for Class, Instruction, P1, P2, required input data for each command and the expected response data and status words SW are defined by the Application-level specification and protocol.

Then the second secure element SE2, by the low-level OS O2, sends (transition T11) the response RC1 plus status words SW, for instance as defined in the Java Card Runtime Environment Specification mentioned above, to the reader 12, which in its turn send, transition T12, such response RC2 plus status words SW to the first host application APP1 at the host 11. After the transition T10 the second Secure Element SE2 also enters an idle time or standby state, indicated by a transition T10' cycling at the OS O2 level.

The first host application APP1 then handles the response RC1 and status words SW of the second Secure Element SE2, i.e. performing the one or more applet operations determined by such response RC1 and status words SW(transition T13) and when it is finished issues, transition T14, a new command to the second secure element SE, through the reader 12 which issues a second APDU command AC2 in a transition T15. As shown in figure 2, time periods at the first secure element SE1 (in particular related to the first application APP1) and second secure element SE2 (O2) may be defined:
- a Host Wait Time HWT, between transitions T2 and T12 at the host application APP1, i.e., the time the host 11, in particular the application APP1, waits for the response of the second Secure Element SE2, and
- a Secure Element Command Handling Time SEHT, between transitions T3 and T11, which is the times it takes the second Secure Element SE2 to handle the first APDU command AC1, i.e. to perform the operation required from the second Secure Element SE2 by such a command AC1;
- a Secure Element Wait Time SEWT, between an idle state or standby state entered by the OS 22 after the transitions T10 (T10') and the receival of the second APDU command AC2 in the transition T15, i.e. the time during which the second Secure Element SE2 stays idle waiting for the next command;
- a Host Process Time HPT between transitions T12 and T14, which is the time it takes to the applet APP1/host 11 to process the response RC1 and issue the next command, AC2.

Due to the host process time HPT and the time needed for the next command AC2 to be received by the second Secure Element SE2, the second Secure Element SE2 wait time SEWT corresponds to a dead time, i.e., a time with little or no activity. During the wait time SEWT, the Secure Element SE2 typically enters in a standby state: a state in which the second Secure Element SE2 can switch to low power mode, to reduce power consumption till the second APDU command AC2 or next APDU command is received.

According to Java Card Virtual Machine specification, the Java Card Applet execution (e.g., procedure P1) is single-threaded: the applet cannot parallelize any tasks. Time-consuming operations on the second Secure Element SE2 increase the secure element command handling time SEHT and host wait time HWT. Time-consuming operations on the first host side, e.g. the mobile phone, increase the host process time HPT and the secure element wait time SEWT.

Being the Host/Secure Element communication typically half-duplex and being the Secure Element able to handle one command at a time, the typical way to improve performances is to act on the Host and/or the Secure Element as follows:
Host and Secure Element: Optimizing Operating System, Application code
Host and Secure Element: Increasing CPU (Central Processing Unit) operating frequency, I/O (Input/Output) protocol speed
Secure Element only: Removing any unnecessary NVM operations
Secure Element only: Fine-tuning security countermeasures or reducing them when the applicative use case allows it (Secure Element side)
Secure Element only: Provide dedicated API (Application Programming Interface) tailored on the specific use case of the application (Secure Element side).

Each of such measures has drawbacks.

Hosts, in the given example both the hosts, have complex architectures and operating constraints: HW/SW layers interact according to well-defined protocols, timings, power consumption limitations, limited improvements are possible.

Also, the Secure Elements shall strictly follow security guidelines: the level of countermeasures cannot be reduced below the threshold defined in the guidelines.

Standard API available on all Java Card-based Secure Elements are "general purpose" and shall securely serve any possible applicative use case, thus security level cannot be tailored to a specific application.

Dedicated API may provide the required trade-off between performance and security, but they cannot be reused on all possible use cases.

### Object and summary

Considering the foregoing, an object of various embodiments of the present disclosure is to provide solutions that are able to overcome one or more of the limits of the prior art.

According to one or more embodiments, one or more of the previous objects are achieved by a method for performing the execution of an application in a Secure Element,
comprising sending by at least a host sending at least an APDU command to a Secure Element comprising said application,
processing at said Secure Element said at least an APDU command for execution by said application, performing a determined plurality of operations of said application commanded by said at least an APDU command,
wherein
said application determining among said plurality of application operations commanded by said at least an APDU command at least a first set of operations to be executed by said application upon receiving said APDU command and at least a second set of operations,
said method comprising, at said Secure Element,
performing said first set of operations to be executed by said application upon receiving said APDU command,
performing a deferred execution of said at least a second set of operations upon communication of completion of the execution of said at least a first set of operations from the Secure Element to the host.

In variant embodiments, said processing said at least an APDU command for execution by said application comprises processing in a Runtime Environment of said Secure Element,
said method comprising providing in said Secure Element a software module defining a deferred procedure execution privileged entity,
said application determining among said plurality of application operations commanded by said at least an APDU command said at least a first set of operations to be executed by said application upon receiving said APDU command and said at least a second set of operations to be executed by said deferred procedure,
said method comprising performing said deferred execution of said at least a second set of operations by commanding through said Runtime Environment to the deferred procedure execution privileged entity said deferred execution in a deferred procedure object created by said deferred procedure execution privileged entity,
waiting at said Secure Element to supply to the Runtime Environment a further APDU command until completion of such second set of operations to be executed by said deferred procedure object.

In variant embodiments, said deferred procedure execution privileged entity creates said deferred procedure object during an install phase (install of the application.

In variant embodiments, said deferred procedure execution privileged entity creates said deferred procedure object when an APDU command, in particular the first APDU command, is processed at the Secure Element.

In variant embodiments, said software module defining a deferred procedure execution privileged entity exposes an API added to a system, in particular a Java Card System in the Secure Element, comprising the Runtime Enviroment.

In variant embodiments, said Secure Element is hosted in said host.

In variant embodiments, wherein said Secure Element is hosted in a different host.

In variant embodiments, the method comprising, when a further APDU command is received at the Secure Element, performing a check at said deferred procedure execution privileged entity of the result of the execution of the deferred procedure object associated to said at least an APDU command.

In variant embodiments, the method comprising,
performing said first set of operations corresponding to a first task,
requesting by the appplication to the deferred procedure execution privileged entity execution of the deferred procedure object, the deferred procedure execution privileged entity being configured upon receival of said request to schedule said deferred procedure in the Runtime Environment, indicating that the deferred procedure object is assigned to the application and to start the the deferred procedure object execution at an idle or standby time after sending a response, in particular an APDU response and status words determined by the completion of the first set of operations from the Secure Element to the host,
the Runtime Environment upon receiving said schedule being configured to indicate, in particular by setting a flag, pending execution of the Deferred Procedure, said Secure Element being configured to wait for the execution of a further APDU command until the indication of pending execution of the Deferred Procedure. is removed,
after sending said response the Runtime Environment commanding to the deferred procedure execution privileged entity execution to start execution of the Deferred Procedure object, executing said second set of operations,
then, after signaling completion of the second set of operations or issuance of an exception during their execution, signaling by the deferred procedure execution privileged entity the completion of the Deferred Procedure to the Runtime Environment, which correspondingly performs the removal of the indication of pending execution of the Deferred Procedure.

In variant embodiments, said Secure Element comprises an operating system portion dedicated to input/output communication operation, exchanging signals between the Runtime Environment and the host.

In variant embodiments, said application is configured to determine among said plurality of application operations commanded by said at least an APDU command at least a first set of operations to be executed by said application upon receiving said APDU command and at least a second set of operations according to a criterion based on the execution time of the operations and/or a priority of execution of the operations.

In variant embodiments, in which said application is a Java Card Applet, said Runtime Environment is a Java Card Runtime Environment.

According to one or more embodiments, one or more of the previous objects are achieved also by a system comprising a host and a Secure Element in communication exchange, said Secure Element comprising an application, in particular a Java Card Applet, said host being configured to send at least an APDU command to said said application, wherein said system is configured to perform the operation of the method according to embodiments.

In variant embodiments, said system comprises a first host, in particular hosting a respective Secure Element and a second host comprising said Secure Element comprising said application, in particular Java Card Applet.

In variant embodiments, said first host is a user terminal and said second host is an ECU of a vehicle, in particular configured to command actuation of the vehicle door or starting the car engine.

In variant embodiments, said host and said Secure Element communicate through a wired or wireless channel, in particular a NFC and/or a UWB and/or a BLE channel.

According to one or more embodiments, one or more of the previous objects are achieved also by a Secure Element configured to communicate with at least a host, said Secure Element comprising an application, in particular a Java Card Applet, said SSecure Element being configured to proces said at least an APDU command for execution by said application, performing a determined plurality of operations of said application commanded by said at least an APDU command, said application determining among said plurality of application operations commanded by said at least an APDU command at least a first set of operations to be executed by said application upon receiving said APDU command and at least a second set of operations,
performing said first set of operations to be executed by said application upon receiving said APDU command,
performing a deferred execution of said at least a second set of operations upon communication of completion of the execution of said at least a first set of operations from the Secure Element to the host.

### Brief description of the annexed drawings

The embodiments of the present disclosure will now be described with reference to the annexed drawings, which are provided purely by way of nonlimiting example, and in which:
- Figure 1 shows schematically a system comprising hosts and Secure Elements with applets;
- Figure 2 shows a diagram illustrative of a protocol of a method for performing the execution of a Java Card Applet in a Secure Element according to the prior art;
- Figure 3 shows schematically a further system comprising hosts and Secure Elements with applets which is configured to implement the method according to embodiments;
- Figure 4 shows a diagram illustrative of a protocol of a method for performing the execution of a Java Card Applet in a Secure Element according to embodiments;
- Figure 5 shows a diagram of an installation or creation of a procedure of the method according to embodiments;
- Figure 6 shows a diagram of a subsequent phase of result check of the method according to embodiments.

### Detailed description of embodiments

In the ensuing description, various specific details are illustrated, aimed at providing an in-depth understanding of the embodiments. The embodiments may be provided without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present disclosure is intended to indicate that a particular configuration, structure, or characteristic described in relation to the embodiment is comprised in at least one embodiment. Hence, phrases such as "in an embodiment" or "in one embodiment" that may be present in various points of this description do not necessarily refer to one and the same embodiment. Moreover, particular conformations, structures, or characteristics may be combined in any adequate way in one or more embodiments.

The references used herein are provided only for convenience and hence do not define the sphere of protection or the scope of the embodiments.

In brief, the solution here described provides a method performing the execution of a Java Card Applet in a Secure Element, where a host sends an APDU command to a Secure Element comprising such Java Card applet, which may be implemented in proprietary API, defining proprietary Java Card classes, allowing applets to group time-consuming operations into tasks to be executed at a later protocol stage ("deferred tasks"), schedule such tasks and get outcome when the proper protocol stage is reached.

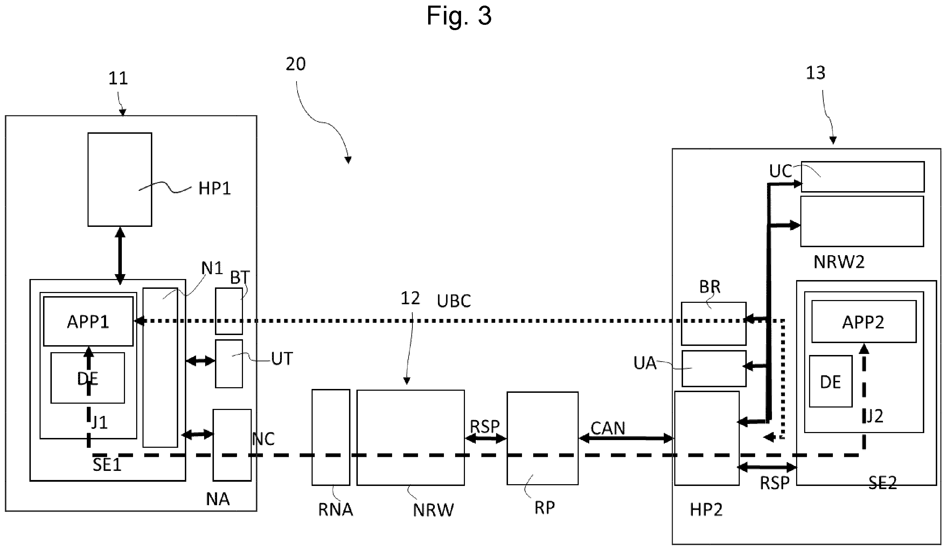

In figure 3 it is shown schematically a system 20 which may implement the solution here described, which has substantially the same architecture shown in Figure 1. Same reference number indicate same elements with same function. Thus, the system comprises the first host 11, comprising the host application APP1 operating in the first respective Java Card Runtime Environment J1 within a first Secure Element SE1. The use example here is also the same, the host application APP1 accessing the NFC controller N1 in the first Secure Element SE1 to communicate, through a NFC antenna NA in the first host 11 with a NFC reader 12 which is coupled for communication, e.g. via a CAN bus VB, to the second host 13, e.g. an ECU host, which includes the respective second Secure Element SE2 comprising the respective Java Card Runtime Environment J2 comprising the second Java Card applet APP2. As mentioned, the presence of the reader 12 is to fully exemplify a communication channel between the hosts, but in general the reader 12 is not required by the solution, as long as the hosts have a communication mean, e.g. a wireless or wired communication channel to communicate between each other and the respective Secure Elements. Also, in embodiments, the method applies to host interacting with their own Secure Element, i.e. hosted by the host itself, where communication is provided e.g. by a bus or other signals lines. Also, here a dashed line indicates the path of the commands from the first host 11, in particular from the first applet APP1, to the second applet APP2 in the second host 13.

The only difference is that in each Java Card Runtime Environment J1 and J2 is indicated the presence of a Deferred Executor module DE. The Deferred Executore module DE is a software module, in particular an API (Application Programming Interface). The solution here described provides by the Defferred Executre DE a software extension of the Java Card platform, i.e. the Java Card Runtime Environment J1 and/or J2, and a specific API package for computing complex and time-consuming operations in the idle time. For instance, the applet APP2 residing on the second Secure Element S2 may invoke this API, i.e. Deferred Executor DE, to defer the operation in the idle time (i.e. when one of the two parties, i.e. hosts, is waiting for next command/response exchange.

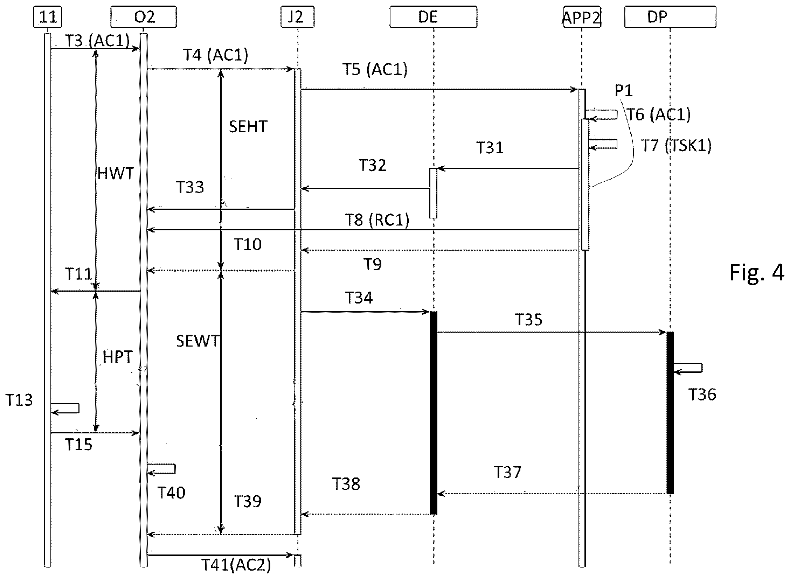

In figure 4 it is shown a protocol diagram exemplary of the solution here described. In the diagram the second applet APP2 represents the Java Card applet invoking the deferred procedure, thus the solution is shown as applied in the second Secure Element SE2, although it may be present in the first Secure Element SE1 in the same time as well. With respect to figure 2 or the system of figure 1, the protocol of figure 4 refers to a system where a reader is not present, i.e. the host 11 communicates directly with the host 13, i.e. the second low-level operating system O2 receives the first APDU command AC1 from the host 11 directly (e.g. by a NFC channel or other type of communication channel, wireless or wired). The host 11, instead of the reader 12, in this case sends the first APDU command AC1 in the transition T3 to the second secure element SE2, which in its turn receives the first APDU command AC1 at its low-level operating system O2. In the same way the low-level operating system O2 performs the same transition T4(AC1) supplying the APDU AC1 to the Java Card Runtime Environment J2.The Java Card Runtime Environment J2 in the transition T5 processes the APDU command AC1, e.g. applies the Applet.process(APDU) Method and starts the applet execution procedure P1, in which the Java Card Virtual Machine executes the second applet APP2 process, i.e., in transition T6 processing the first APDU command AC1, then performing T7 a corresponding first task TSK1, i.e., a task with a first set of operations to be performed by the appled APP2 required by the APDU command AC1.

In the protocol shown in figure 4 however are represented a deferred procedure execution privileged entity, i.e. the Deferred Executor DE, and a deferred procedure object DP.

The Deferred Executor DE is a privileged entity, obtained by adding a specific API, able to create "Deferred Procedure" DP objects. It is a Java API, which is configured by its set of software elements, among which one or more of prewritten packages, classes, and interfaces with their respective methods, fields and constructors, to perform the operations of the Deferred Executor DE described in the following. The Deferred Executor DE as indicated exposes, i.e. enables access to, an API package added to the Java Card System, in addition to elements such as the JCVM, the JCRE, the standard Java Card API. The Java Card applet APP2 asks the Deferred Executor DE to create a DeferredProcedure object DP and assign such DeferredProcedure object DP to the applet APP2. The applet APP2 appends time-consuming tasks to the Deferred Procedure object DP, so they can be executed at a later stage, i.e. the applet APP2 is configured to group the operations determined by the APDU AC1 in a first set operations, assigned to the first task TSK1, and to a second set of operations, preferably comprising time-consuming operations, assigned to the second task TSK2.

Therefore, after transition T7, the applet APP2 is configured to perform a request T31 to the Deferred Executor DE requesting execution by a deferred procedure DP. The Deferred Executor DE is configured upon receival of such request T31 to schedule such deferred procedure DP (T32) in the Java Card Runtime Environment J2, i.e. indicate to the Java Card Runtime Environment J2 that the deferred procedure DP is assigned to the applet APP2 and to start the deferred procedure DP at the idle time T10'. The Java Card Runtime Environment J2 upon receiving the schedule of the deferred procedure DP T32, sets T33 a flag Deferred Execution Pending to TRUE in the Operative System O2, i.e. execution of deferred procedure object DP is pending.

Then, the transition T8 is performed sending a command response, i.e. the response APDU RC1, to the low-level operating system O2.

In this case, differently with respect to figure 2, the applet APP2 after execution of the operatons of the first tasks TSK1, sends a completion signal T9, indicating that the command AC1 is processed, to the Java Card Runtime Environment J2, which in turns determines sending, transition T10, status words SW to the low-level operating system O2. Indeed, the command AC1 is processed in that the first task TSK1 has been executed while the second task TSK2 is being executed (after reaching the idle state T10') in the Deferred Procedure DP.

Then the second secure element SE2, by the low-level OS O2, sends (transition T11) the response RC1 plus status words SW, for instance as defined in the JCRE Specification mentioned above, to the host 11 (in embodiments to the first application APP1, if present, although it may be also directly to the host 11). The host 11, by the first host application APP1 or not, handles the response RC1 and status words SW of the second Secure Element SE2, i.e. performing the operations determined by such response RC1 and status words SW(transition T13) and when it is finished issues a new command to the second secure element SE, issuing a second APDU command AC2 in a transition T15 (without the reader transition T14 is skipped) to the OS O2. In this case, according the solution here described, the OS O2, while the flag Deferred Execution Pending is set to TRUE waits to forward the command AC2 to the Java Card Runtime Environment J2 (transition T39).

Also according to the solution here described, corresponding to the time in which, in the prior art protocol of figure 2, after the transition T10 the second Secure Element SE2 also enters an idle time or standby state, indicated by a transition T10' cycling at the OS O2 level, in the protocol of figure 4 the Java Card Runtime Environment J2, which was scheduled in transition T32 by the Deferred Executor DE, in a transition T34 commands the Deferred Executor DE to start the Deferred Execution. Thus the Deferred Executor DE issues (T35) an execute command to the deferred procedure object DP, which executes T36 the second task TSK2, i.e. the second set of operations, which are in particular time-consuming.

After completion of the second set of operations in the second task TSK2 (or issuance of an exception during their execution) signaled by the Deferred Procedure object DP to the Deferred Executor in a transition T37, the Deferred Executor signals T38 the completion of the Deferred Procedure to the Java Card Runtime Environment J2, which sets the flag Deferred Execution Pending to FALSE (T40) in the low-level operating system OS2, which consequenty exict the wait state T40 and forwards the second APDU AC2 to the Java Card Runtime Environment J2, for execution at the applet APP2.

Thus, as just described, a "Deferred-Execution model" is proposed that allows the Java Card Runtime Environment to execute deferred tasks when the Secure Element is in "idle/standby" state.

When the Java Card Applet receives an APDU command requiring time-consuming task, it requests scheduling the "DeferredProcedure" created at previous step. The Java Card Runtime Environment executes it after sending the APDU status words to the host. If the input/output operating system of the Secure Element receives the next APDU before DeferredProcedure is completed, it delays the processing of the new APDU.

The Secure Element remains active during the time HPT to execute the Deferred Procedure.

Thus, based on the above, with reference to figures 3 and 4 is described a method for performing the execution of an application APP2, in particular a Java Card Applet, in a Secure Element, e.g. SE2,
comprising sending by, e.g. transitions T1-T4, at least a host, e.g. the first host 11, sending at least an APDU command, e.g., AC1, to a Secure Element, e.g., the second Secure Element SE2, comprising said application, e.g., the second Java applet APP2,
processing, e.g. transition T6, at said Secure Element, SE2, said at least an APDU command, AC1, for execution by said application APP2, performing a determined plurality of operations of said application APP2 commanded by said at least an APDU command, AC1, wherein
said application APP2 determining among said plurality of application operations commanded by said at least an APDU command AC1 at least a first set, e.g., TSK1, of operations to be executed by said application APP2 upon receiving said APDU command AC1 and at least a second set, e.g., TSK2 of operations,
said method comprising, at said Secure Element, SE2,
performing said first set TSK1 of operations to be executed by said application APP2 upon receiving said APDU command AC),
performing a deferred execution, e.g, transactions T34-T39, of said at least a second set TSK2 of operations upon communication of completion of the execution of said at least a first set TSK1 of operations from the Secure Element SE2 to the host, e.g. first host (11).

As indicated, said Secure Element, e.g. SE2, waits to supply to a Runtime Environment, e.g. Java Carda Runtime Enviroment J2, a further APDU command, e.g. AC2, until completion of the deferred execution of such second set, e.g. TSK2, of operations to be executed.

More in detail, with reference to figures 3 and 4 is described a method for performing the execution of an application, in particular Java Card Applet, e.g. APP2, in a Secure Element, e.g. SE2,
comprising at least a host, e.g. 11, sending, e.g. T, at least an APDU command, e.g. AC1, to a Secure Element, e.g. SE2, comprising said an application, in particular Java Card Applet, e.g. APP2,
said Secure Element, e.g. SE2, comprising a Runtime Enviroment, in particular a Java Card Runtime Environment, e.g. J2, which is configured to process said at least an APDU command, e.g. AC1, for execution by said application, in particular Java Card Applet, e.g. APP2,
said application, in particular Java Card Applet, e.g. APP2, being configured to perform a determined plurality of applet operations commanded by said at least an APDU command, e.g. AC1,
said method comprising
providing in said Secure Element, e.g. SE2, a software module defining a deferred procedure execution privileged entity, e.g. DE,
said application, in particular Java Card Applet, e.g. APP2, being configured to select among said operations commanded by said at least an APDU command, e.g. AC1, at least a first set, e.g. TSK1, of operations to perform upon receiving said at least an APDU command, e.g. AC1, and at least a second set, e.g. TSK2, of operations to execute by said deferred procedure,
said Java Card Runtime Environment, e.g. J2, being configured to command to the deferred procedure execution privileged entity, e.g. DE, execution of said at least a second set, e.g. TSK2, of operations in a deferred procedure object, e.g. DP, created by said deferred procedure execution privileged entity, e.g. DE, upon communication of completion of the execution of the at least a first set of operations, e.g. TSK1, from the Secure Element, e.g. SE2, to the host, e.g. 11,
said Secure Element, e.g. SE2, being configured to wait to supply to the Runtime Environment, in particular Java Card Runtime Environment, e.g. J2, a further APDU command until completion of such second set, e.g. TSK2, of operations to execute by said deferred procedure object, e.g. DP.

The software module defining a deferred procedure execution privileged entity DE, i.e. the Deferred Executor, maybe an API, more in particular may be an API added to the Java Card Runtime Environment, e.g. J2, in the Secure Element, e.g. SE2.

Referring to the specific transitions, basically such method provides performing, e.g. T7, said first set of operations corresponding to a first task, e.g. TSK1,
requesting, e.g. T31, by the Java Card applet, e.g. APP2, to the deferred procedure execution privileged entity, e.g. DE, execution of the deferred procedure object, e.g. DP, the deferred procedure execution privileged entity, e.g. DE, being configured upon receival of said request, e.g. T31, to schedule said deferred procedure, e.g. T32, in the Java Card Runtime Environment, e.g. J2, indicating that the deferred procedure object, e.g. DP, is assigned to the Java Card applet, e.g. APP2, and to start the the deferred procedure object, e.g. DP, execution at a idle or standby time, e.g. T10', after sending, e.g. T11, a response, in particular an APDU response, e.g. RC1, and status words, e.g. SW, determined by the completion of the first set of operatons, e.g. TSK1, from the Secure Element, e.g. SE2, to the host, e.g. 11,
the Java Card Runtime Environment, e.g. J2, upon receiving said schedule, e.g. T32, being configured to indicate, in particular by setting a flag, e.g. T33, pending execution of the Deferred Procedure, e.g. DP, said Secure Element being configured to wait, e.g. T40, for the execution of a further APDU command, e.g. AC2, until the indication of pending execution of the Deferred Procedure, e.g. DP, is removed, e.g. T39,
after sending, e.g. T11, said response the Java Card Runtime Environment, e.g. J2, commanding, e.g. T34, to the deferred procedure execution privileged entity, e.g. DE, execution to start, e.g. T35, execution of the Deferred Procedure object, e.g. DP, executing, e.g. T36, said second set of operations, e.g. TSK2,
then, after signaling completion of the second set of operations, e.g. TSK2, or issuance of an exception during their execution, signaling, e.g. T37, T38, by the deferred procedure execution privileged entity, e.g. DE, the completion of the Deferred Procedure to the Java Card Runtime Environment, e.g. J2, is signalled which correspondingly performs the removal, e.g. T39, of the indication of pending execution of the Deferred Procedure, e.g. DP.

In embodiments, if no completion signal is received within a time out interval, the host 11 may resend the command, e.g. first APDU, AC1. This means restarting processing such command starting from the first task TSK1.

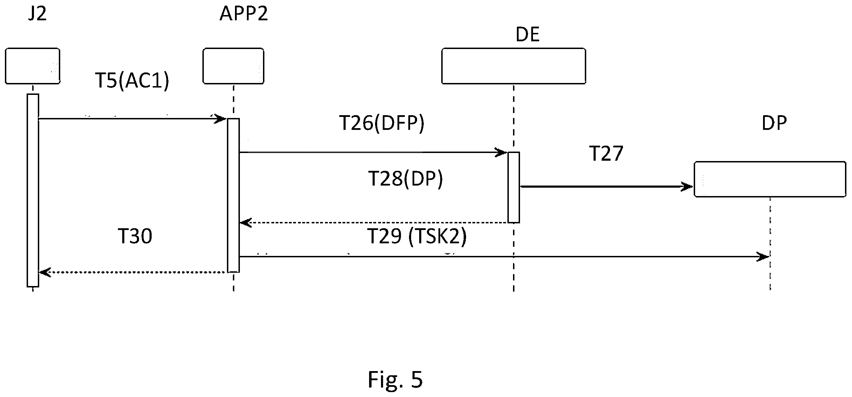

In figure 5, it is shown a protocol diagram presenting transitions referring to a setup or installation phase of the Deferred procedure, i.e. the Deferred Executor DE and the Deferred Procedure Object, at the second Secure Element SE2 according to the solution here proposed are described.

In the diagram of figure 5, it is shown transition T5 from the Java Card Runtime Environment J2, which indicates processing the first APDU command AC1, e.g. applies the Applet.process(APDU) method and starts an applet execution procedure P1. Alternatively, at the setup transition T5 may correspond to an install operation, i.e. the applet.install() method of Java Card Runtime Environment, which main task within the applet is to create an instance of the Applet subclass using its constructor, and to register the instance.

Then, the second applet APP2 creates the deferred procedure object DP by a creation command (transition T26) to the Deferred Executor DE. The Deferred Executor DE, as mentioned, is a privileged entity, like the Java Card Runtime Environment J2 with which interacts, able to create Deferred Procedure obj ects DP. The Applet APP2 asks the Deferred Executor DE to create a Deferred Procedure object DP and assign it to the applet APP2.

The Deferred Executor DE creates (T27) a new deferred procedure object DP, then returns T28 the deferred procedure object DP to the applet APP2. The second applet APP2 upon receival performs appending the second task TSK2 to the deferred procedure DFP (transition T29) the returns control T30 to the Java Card Runtime Environment J2. The Java Card Applet APP2 appends time-consuming tasks to the Deferred Procedure object DP, so they can be executed at a later stage.

Appending in transition T29 inserts tasks, e.g. the second task TSK2, in the deferred procedure object DP created by the Deferred Executor DE, which is initially empty. As said the the Java Card Applet is configured to group the operations commanded by a certain APDU command, e.g. AC1, in at least a first set of applet operations, associated to task TSK1, and second set of applet operations, associated to at least a second task TSK2. Such second set of applet operations preferably contains the more time-consuming operations.

As shown, to avoid wasting time during application protocol execution, the applet APP2 may create the DeferredProcedure object DP in advance (e.g. during Applet installation). The protocol transitions of figure 4 may take place before the operations of the protocol of figure 3, as this corresponds to the setting of the Deferred Procedure object DP, e.g. at the installation of the applet APP2 (transition T5 being install()). The applet APP2 however could perform this also after receiving the first APDU, e.g. AC1 (transition T5 being process()).

Thus substantially here the method includes that the deferred procedure execution privileged entity, DE, creates the deferred procedure object DP during an install phase, e.g. method (install()), of the Java Card applet, e.g., APP2, or creates said deferred procedure object DP when an APDU command, in particular the first APDU command AC1, is processed at the Secure Element, e.g., SE2.

The solution requires that at a given protocol stage, the Java Card Applet, APP2 in the example, knows one or more time-consuming tasks shall be performed. Also all task(s) inputs are available, e.g. input data shared passed by the host in a previous exchange or data permanently stored in the Secure Element memory. Results of the task or tasks are only to be used at a later stage of the protocol (e.g., after further APDU exchanges). The deferred execution of time-consuming task thus may imply all inputs are available with the first command and its outputs are used or take in consideration only on a later command.

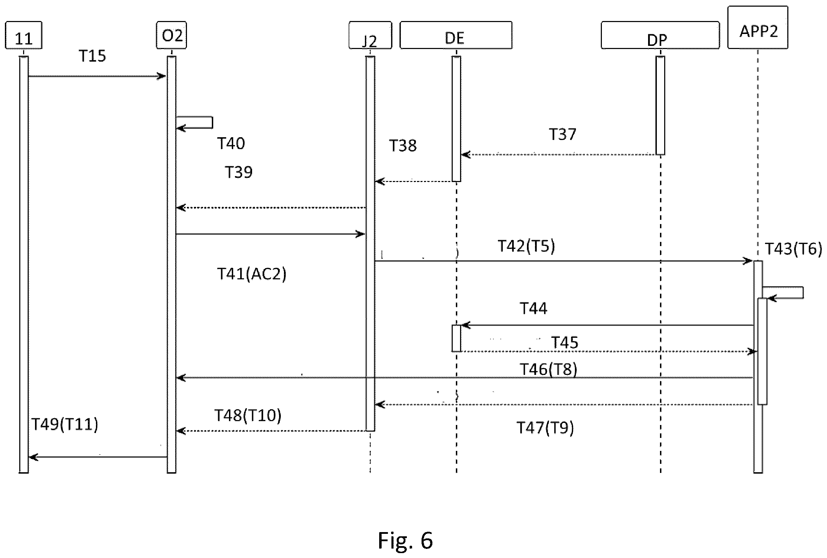

To this last regard, in figure 6 it is also described a check procedure of the protocol.

After the receival of the second APDU command AC2 (T15), the OS O2 postpones its execution maintaining the wait state T40 till the flag is set to FALSE (T39) during execution of the deferred transitions, i.e. T37, T38, then sends the second APDU AC2 to the Java Card Runtime Environment J2 (T41(AC2), in a transition corresponding to T4, then the applet performs execution of the second ADPU AC2 (T42 corresponding to T5), processing the command AC2, the issues to the Deferred Executor DE a request T45 to check result of the previous Deferred Procedure. The Deferred Executor De sends T45 to the applet APP2 a result or exception. Then the applet APP2 sends T46 (corresponding to T8) command response to the OS O2 and, then the completion of the command processing (T47 corresponding to T9), followed by the status word SW to the OS O2 (T48 corresponding to T10). Finally, the APDu response plus status words SW is sent (T49 corresponding to T11). to the host 11.

Thus, the protocol of figure 6 shows how results of the task or tasks, e.g. TSK2, are to be used only at a later stage of the protocol, after further APDU exchanges, in this case after execution of the second ADPU AC2. Deferring execution of a procedure may mean postponing also any management of error that should have been performed during execution of first APDU command. It is therefore allowed to the applet APP2, when processing the second APDU command, to query the status of execution of the deferred procedure and handle any error.

In particular, the method here described comprises, when a further APDU command, e.g. second command AC2, is received at the Secure Element SE2, performing a check, by operations T45, T46 at said deferred procedure execution privileged entity DE, of the result of the execution of the deferred procedure object DP associated to said at least an APDU command, i.e. the previous command AC1.

The solution here described can be applied to any scenario requiring high-performances on time-consuming operations and where there is enough lead-time between command processing (even multiple commands), of course this depending on the capability, e.g. computational speed and power of the systems involved.

Similar result may be obtained by modifying the behaviour of Java Card Runtime Environment, the operative system layer in charge of input/output communication: the APDU Response and Status Words may be sent in advance while the Applet.process() method is still running, assuming the applet does not modify response buffer or software, nevertheless this impacts several SW layers in the SE implementation.

The application, e.g APP2, is configured, e.g. by programming by a programmed or developer, to determine among said plurality of application operations commanded by said at least an APDU command AC1 at least a first set TSK1 of operations to be executed by said application APP2 upon receiving said APDU command AC1 and at least a second set TSK2 of operations according to a criterion based on the execution time of the operations and/or a priority of execution of the operations. Other criteria may be possible, depending on the application features.

It is underlined that the determining or selecting the set of tasks, e.g. first task TSK1 and second task TSK2, and also partition in other subsequent task of the operation of the applet APP2, is part of the design/programming of the application, e.g. APP2, which may be possibly based on timing/priority criteria. For instance, an application specification may define or determine its own APDU commands/responses (APDU formatted for instance according to ISO 7816-4). For each APDU command, the specification defines the exact input the Host has to provide to the Secure Element in which the application, e.g. APP2, is stored, the expected computations or operations the Secure Element shall perform, as well as the expected output data and status words, e.g. SW, the Secure Element shall provide in case of successful command processing (e.g. normal processing) and/or in case of error. Thus, all the code needed for the command processing, exact code of the tasks, and creations of deferred procedures, is been pre-defined or determined during the application or applet development.

Based on what is defined in the application specification, the applet developer may know in advance which commands are the critical ones in terms of computation, or execution, time, as well as on which one it is expected that the Host, e.g. 11, uses a great amount of processing time on its side. As a consequence, the application code can be designed in such a way to handle each command processing by means of a sequence of tasks to be executed as a whole (i.e. before returning the status words), or even defining a task that anticipates part of the processing of next command instead of just waiting.

Thus, based on the above, the advantages of the described solution are clear.

The solution described here allows to execute applets with time consuming operations in a better wat with respect to methods using increase of frequency, I/O and CPU speed, or reduction of countermeasures.

Also, the solution described does not require to rewrite portion of Applet code from Java to native.

The solution described is a generic mechanism, that can operate with different use cases or applications involving time-consuming operations.

Applications have only to group in a `Deferred Procedure' all those operations that can be deferred to a later APDU exchange, without dealing with ad-hoc optimizations strictly related to a given operation. The extension is "pluggable" Java Card extension: it does not change the behaviour described in official Java Card API (no impact on official test suites). The DeferredProcedure is an object instantiation of a class written as java card code, allowing the applet to append applet tasks (java card objects and associated code). DeferredExecutor is an isolated software module, which is an extension of the Java Card Runtime Environment. Minimal impacts to Low-level OS and JCRE layers: essentially, are needed flags to tell Java Card Runtime Environment a new procedure shall be executed (like it does with Applet.process() method, any flags for the OS to postpone processing of any incoming APDU until the deferred procedure is complete.

Of course, without prejudice to the principle of the invention, the details of construction and the embodiments may vary widely with respect to what has been described and illustrated herein purely by way of example, without thereby departing from the scope of the present invention, as defined by the ensuing claims.

The solution here described can be applied between a first and a second host, comprising respective Secure Elements, as in the exemplary embodiment.

However, the solution here described applies in all the systems which comprise at least a host sending APDU commands to a Secure Element comprising a Java Card applet. Thus, it can apply to a host sending commands to a Secure Element of its own, rather than to Secure Elements of other hosts, or to any other exchange of APDUs and response between any host and any Secure Element.

## Claims

1. A method for performing the execution of an application (APP2) in a Secure Element (SE2),
comprising sending by (T1-T4) at least a host (11) sending at least an APDU command (AC1) to a Secure Element (SE2) comprising said application (APP2),
processing (T6) at said Secure Element (SE2) said at least an APDU command (AC1) for execution by said application (APP2), performing a determined plurality of operations of said application (APP2) commanded by said at least an APDU command (AC1),
wherein
said application (APP2) determining among said plurality of application operations commanded by said at least an APDU command (AC1) at least a first set (TSK1) of operations to be executed by said application (APP2) upon receiving said APDU command (AC1) and at least a second set (TSK2) of operations processing,
said method comprising, at said Secure Element (SE2),
performing said first set (TSK1) of operations to be executed by said application (APP2) upon receiving said APDU command (AC1),
performing a deferred execution (T34-T39) of said at least a second set (TSK2) of operations upon communication of completion of the execution of said at least a first set (TSK1) of operations from the Secure Element (SE2) to the host (11).

2. The method of claim 1, wherein
said processing (T6) said at least an APDU command (AC1) for execution by said application (APP2) comprises processing in a Runtime Environment (J2) of said Secure Element (SE2),
said method comprising providing in said Secure Element (SE2) a software module defining a deferred procedure execution privileged entity (DE),
said application (APP2) determining among said plurality of application operations commanded by said at least an APDU command (AC1) said at least a first set (TSK1) of operations to be executed by said application (APP2) upon receiving said APDU command (AC1) and said at least a second set (TSK2) of operations to be executed by said deferred procedure (DP),
said method comprising performing said deferred execution (T34-T39) of said at least a second set (TSK2) of operations by commanding through said Runtime Environment (J2) to the deferred procedure execution privileged entity (DE) said deferred execution (T34-T39) in a deferred procedure object (DP) created by said deferred procedure execution privileged entity (DE),
waiting at said Secure Element (SE2) to supply to the Runtime Environment (J2) a further APDU command (AC2) until completion of such second set (TSK2) of operations to be executed by said deferred procedure object (DP).

3. A method according to claim 2, wherein said deferred procedure execution privileged entity (DE) creates said deferred procedure object (DP) during an install phase (install()) of the application(APP2).

4. A method according to claim 2 or 3, wherein said deferred procedure execution privileged entity (DE) creates said deferred procedure object (DP) when an APDU command, in particular the first APDU command, is processed at the Secure Element (SE2).

5. A method according to any of the preceding claims from 2 to 4, wherein said software module defining a deferred procedure execution privileged entity (DE) exposes an API added to a system, in particular a Java Card System (J2) in the Secure Element (SE2), comprising the Runtime Enviroment.

6. A method according to any of the preceding claims, wherein said Secure Element (SE1) is hosted in said host (11).

7. A method according to any of the preceding claims, wherein said Secure Element (SE2) is hosted in a different host (13).

8. A method according to any of the preceding claims, comprising, when a further APDU command (AC2) is received at the Secure Element (SE2), performing a check (T45, T46) at said deferred procedure execution privileged entity (DE) of the result of the execution of the deferred procedure object (DP) associated to said at least an APDU command (AC1).

9. A method according to any of the preceding claims from 2 to 8, comprising,
performing (T7) said first set of operations corresponding to a first task (TSK1),
requesting (T31) by the appplication (APP2) to the deferred procedure execution privileged entity (DE) execution of the deferred procedure object (DP), the deferred procedure execution privileged entity (DE) being configured upon receival of said request (T31) to schedule said deferred procedure (T32) in the Runtime Environment (J2), indicating that the deferred procedure object (DP) is assigned to the application (APP2) and to start the the deferred procedure object (DP) execution at an idle or standby time (T10') after sending (T11) a response, in particular an APDU response (RC1) and status words (SW) determined by the completion of the first set of operations (TSK1) from the Secure Element (SE2) to the host (11),
the Runtime Environment (J2) upon receiving said schedule (T32) being configured to indicate, in particular by setting a flag (T33), pending execution of the Deferred Procedure (DP), said Secure Element being configured to wait (T40) for the execution of a further APDU command (AC2) until the indication of pending execution of the Deferred Procedure (DP), is removed (T39),
after sending (T11) said response the Runtime Environment (J2) commanding (T34) to the deferred procedure execution privileged entity (DE) execution to start (T35) execution of the Deferred Procedure object (DP), executing (T36) said second set of operations (TSK2),
then, after signaling completion of the second set of operations (TSK2) or issuance of an exception during their execution, signaling (T37, T38) by the deferred procedure execution privileged entity (DE) the completion of the Deferred Procedure to the Runtime Environment (J2), which correspondingly performs the removal (T39) of the indication of pending execution of the Deferred Procedure (DP).

10. A method according to any of the preceding claims, wherein said Secure Element (SE2) comprises an operating system portion (O2) dedicated to input/output communication operation, exchanging signals between the Runtime Environment (J2) and the host (11).

11. A method according to any of preceding claims in which said application (APP2) is configured to determine among said plurality of application operations commanded by said at least an APDU command (AC1) at least a first set (TSK1) of operations to be executed by said application (APP2) upon receiving said APDU command (AC1) and at least a second set (TSK2) of operations according to a criterion based on the execution time of the operations and/or a priority of execution of the operations.

12. A method according to any of the preceding claims in which said application (APP2) is a Java Card Applet (APP2), said Runtime Environment (J2) is a Java Card Runtime Environment.

13. A system comprising a host (11) and a Secure Element (SE2) in communication exchange (NC, NA), said Secure Element comprising an application, in particular a Java Card Applet, said host (11) being configured to send at least an APDU command (AC1) to said said application (APP2), wherein said system is configured to perform the operation of the method of any of claims 1 to 12.

14. A system according to claim 12, comprising a first host (11), in particular hosting a respective Secure Element (SE1) and a second host (13) comprising said Secure Element (APP2) comprising said application, in particular Java Card Applet.

15. A system according to claims 13 or 14, wherein said first host (11) is a user terminal and said second host (13) is an ECU of a vehicle, in particular configured to command actuation of the vehicle door or starting the car engine.

16. A system according to any of claims 13 or 14 or 15, where in said host (11) and said Secure Element (SE2) communicate through a wired or wireless channel, in particular a NFC and/or a UWB and/or a BLE channel.

17. A Secure Element configured to communicate (NC, NA) with at least a host (11), said Secure Element comprising an application, in particular a Java Card Applet, said SSecure Element (11) being configured to proces (T6) said at least an APDU command (AC1) for execution by said application (APP2), performing a determined plurality of operations of said application (APP2) commanded by said at least an APDU command (AC1), said application (APP2) determining among said plurality of application operations commanded by said at least an APDU command (AC1) at least a first set (TSK1) of operations to be executed by said application (APP2) upon receiving said APDU command (AC1) and at least a second set (TSK2) of operations,
performing said first set (TSK1) of operations to be executed by said application (APP2) upon receiving said APDU command (AC1),
performing a deferred execution (T34-T39) of said at least a second set (TSK2) of operations upon communication of completion of the execution of said at least a first set (TSK1) of operations from the Secure Element (SE2) to the host (11).
